# EUROPEAN PATENT SPECIFICATION

(11) **EP 3 981 248 B1**
(45) Date of publication and mention of the grant of the patent: **29.01.2025**
(21) Application number: 21201502.8
(22) Date of filing: 07.10.2021
(51) Int. Cl.: A01M 7/00

(54) **APPARATUS FOR SPRAYING CROPS**
VORRICHTUNG ZUM BESPRÜHEN VON ERNTEGUT
APPAREIL DE VAPORISATION DE CULTURES

(30) Priority: 12.10.2020 IT 202000023995
(43) Date of publication of application: 13.04.2022
(73) Proprietor: Martignani Ing. C. Di Martignani Stefano & C. S.r.l., 48020 Sant'Agata Sul Santerno (IT)
(72) Inventor: MARTIGNANI, Stefano, 48022 LUGO (RA) (IT); MORELLI, Massimo, 48018 FAENZA (RA) (IT)
(74) Representative: Conti, Marco

(56) References cited:
- EP-A1- 3 087 835
- CN-A- 110 235 888
- US-A- 3 472 454

## Description

This invention relates to an apparatus for spraying crops and a method for spraying crops. In the sector of said spraying apparatuses there are prior art machines including a tank, for storing a treatment product, a head group, which draws air to mix it with the treatment compound and the pump towards a dispenser, for introducing the treatment compound towards the crops. A prior art sprayer is for example disclosed in EP 3 087 835 A1.

The head group comprises several mechanical components, for example a motor, a speed variator (multiplier) and a centrifugal pump (volumetric), which is driven by the motor. Said components are without doubt the components most subject to wear, since they work with considerable forces and speeds, and are, therefore, the components most subject to maintenance activities.

The machines known in the trade have a head group which faces the tank and which is therefore, during maintenance, not directly accessible. For this reason, at the moment, during maintenance steps, a complex step of disassembling the components is necessary, to have access to the components to be maintained of the head group.

Moreover, according to said solutions, the head group is positioned alongside the tank, precisely because of the need to maintain the group. However, this determines a considerable total length of the apparatus.

Moreover, the elongation of the apparatus, if this is carried by a drive unit, increases the bending forces on the frame of the apparatus and increases the risk of rising up of the drive unit during the spraying steps.

The aim of this invention is to provide an apparatus and a method which overcome the above-mentioned drawbacks of the prior art.

Said aim is fully achieved by the apparatus for spraying and by the method for spraying according to the invention as characterised in the appended claims.

According to an aspect of the invention, the invention provides an apparatus for spraying crops with a treating compound.

The apparatus comprises a tank. The tank is configured to contain the treating compound.

The apparatus comprises a dispenser. The dispenser is configured to receive treatment air at a predetermined treatment pressure, including the treatment compound, preferably in atomised form. Preferably, the atomised treatment compound is also subjected to an electrostatic charge which considerably increases the capacity of adherence to the crops once dispensed.

The apparatus comprises a head group. The head group is configured to draw air from an external environment. The head group is configured to mix the air with the treatment compound. The head group is configured to pump the treatment air to the dispenser. The head group comprises one or more of the following features:
- an electric motor, an internal combustion engine or a power take-off, connected to a tractor which moves the apparatus between the crops;
- a pump or compressor;
- a speed variator, in particular a speed multiplier or a torque reducer;
- one or more filters;
- a nebulizing or micronizing nozzle for the treatment fluid;
- an electric field generator, for the electrostatic charge of the nebulised compound;
- a system for stirring the treatment fluid;
- water for washing the circuit.

The head group includes a maintenance side, from which the head group is accessible for maintenance purposes. The maintenance side is a side of the maintenance unit from which it is more convenient to carry out maintenance activities. Said maintenance side allows the components to be interchanged more quickly. During spraying operations, said maintenance side is preferably inaccessible to prevent dirt, compound or other undesired materials from being deposited between the components of the head group, causing damage.

The apparatus comprises a frame. The frame is configured to support the tank, the dispenser and/or the head group. The frame, in the embodiment in which the apparatus is moved by a drive unit, is connected to said drive unit.

According to an embodiment, the frame comprises a first structure. The tank is positioned on the first structure.

According to an embodiment, the frame comprises a second structure, on which is positioned the head group and, preferably, but not necessarily, the dispenser.

According to an embodiment, the first and the second structure are positioned side by side along a feed direction.

According to a preferred embodiment, the frame comprises a connector. The connector is configured for connecting the first structure to the second structure.

The connector is movable between a working position, wherein the first and the second structure are connected to each other, and a maintenance position, wherein the first and the second structure are movable reciprocally. The term "movable reciprocally" is used to extend the protection to any type of relative movement, for example, rotation, translation, roto-translation.

According to an aspect of the invention, the frame is movable between a working configuration, wherein the connector is in the operating position and the maintenance side faces the tank and is forbidden to a maintenance user, and a maintenance configuration, wherein the connector is in the maintenance position and the maintenance side is accessible to a maintenance user.

This feature solves the technical problem of speeding up maintenance activities. In fact, in the working configuration, the maintenance side is protected by the fact that it is strictly facing the tank, preventing undesired materials from entering said components. This also allows the number of guards for protecting said maintenance side to be reduced. Subsequently, if maintenance is necessary, it is sufficient to move the connector to the maintenance position and reconfigure the frame in the maintenance configuration, in order to be able to intervene freely on the components of the head group. This simplifies, speeds up considerably and reduces the probability of human errors in the maintenance operations.

According to an embodiment, the connector comprises a hinge.

According to an embodiment, the connector comprises a locking element. According to this embodiment, the second structure rotates about the hinge. The locking element is mobile between a locked position, in which the first and the second structure are bound to each other, and an unlocked position, in which the first and the second structure are rotating, one relative to the other, around the hinge.

This embodiment is further advantageous since the rotation about the hinge requires a minimum effort for the reconfiguration of the frame in the maintenance configuration.

Moreover, the reconfiguration by rotating the second structure makes it possible to face the maintenance side on the side of the apparatus allowing easy access to the components.

The first structure of the frame includes a first and a second vertex. The first and second vertices face towards the second structure. The first and second vertex are spaced along a transversal direction perpendicular to the feed direction. This makes it possible to obtain an arm relative to the hinge which reduces the effort required for moving the second structure. The second structure comprises a third and a fourth vertex. The third and the fourth vertex face towards the first structure. The third and the fourth vertex are spaced along a transversal direction.

The hinge is positioned at the first and the third vertex. Preferably, the locking element is positioned on the second vertex.

This makes it possible to obtain an arm relative to the hinge which reduces the effort required for moving the second structure.

According to an embodiment, the locking element comprises a pin. The second and the fourth vertex include a corresponding locking hole. Said pin is inserted, in the operating position, in the locking hole of the second and fourth vertex. Said pin is extracted, in the rest position, from the locking hole of the second and fourth vertex.

This embodiment of the locking element is simple, inexpensive and highly reliable.

According to an embodiment, the tank comprises a rear face. The rear face faces the head group, preferably facing the maintenance side of the head group.

The tank comprises a housing. The housing is formed on the rear face of the tank.

According to an embodiment, the head group is partly housed in the housing, in the working configuration of the frame. The head group is extracted (completely) from the housing in the frame maintenance configuration.

This embodiment makes it possible to solve two problems. On the one hand, it further improves the protection of the head group during the working steps, further reducing the need for protective casings, on the other hand, it allows the overall dimensions of the machine along the feed direction to be reduced, thus reducing bending stresses on the frame and the risk of jamming of the apparatus.

According to an embodiment, the head group comprises a manifold. The manifold includes a plurality of deliveries. The manifold includes a corresponding plurality of adjustment valves, each associated with a respective delivery.

According to an embodiment, the dispenser comprises a plurality of nozzles. Each nozzle is connected to a corresponding delivery, which is intercepted by the corresponding adjustment valve. Each adjustment valve and the corresponding delivery nozzle are identified by a same distinctive sign.

This embodiment provides an immediate, perceivable and useful advantage. In fact, during the spraying of the crops, it is possible that one nozzle is, for various reasons, subjected to greater head losses (concentred) than those of another nozzle. This would result in a nonuniformity in spraying, due to the fact that the outfeed pressure from the dispenser could be substantially different. In order to overcome this problem, the machine has adjustment valves. However, whilst at first sight the operator clearly identifies the nozzle lacking in pressure, it is not as immediate to identify the adjustment valve which intercepts the delivery of said unsatisfactory nozzle. For this reason, with the proposed solution, this problem is resolved simply and in an original fashion.

According to an embodiment, the first structure of the frame comprises a drive interface, connectable to a drive unit, for transporting the apparatus between the crops. The drive interface makes it possible to bring the apparatus into suspension using a drive unit. The invention is not, however, limited to said solutions even though they would benefit the most. In fact, the solution according to the invention also extends to apparatuses including rolling elements for rolling on the ground, which are always pulled or machines equipped with independent drive means and do not need a drive unit.

According to an aspect of the invention, the invention provides a method for spraying crops with a treating compound. The method is performed using an apparatus including one or more of the features described in the invention with reference to the apparatus for spraying crops.

The method comprises a step of containing a treatment compound in the tank.

According to an embodiment, the method comprises a step for nebulising the treatment compound. Moreover, preferably, the method comprises an electro-optic charge step, wherein an electric field generator charges, in an electrostatic fashion, particles of treatment compound dispersed in the air. The method comprises a step of mixing air with the treatment compound, preferably nebulised, for producing treatment air.

The method comprises a step of pumping the treated air using the head group.

The method comprises a step of dispensing the treatment air using the dispenser. The method comprises a step of connecting the first structure to the second structure by means of a connector.

The method comprises a step of moving the connector between a working position, wherein the first and the second structure are connected to each other, and a maintenance position, wherein the first and the second structure are movable reciprocally.

The method comprises a step of reconfiguring the frame between a working configuration, wherein the connector is in the operating position and the maintenance side faces the tank and is forbidden to a maintenance user, and a maintenance configuration, wherein the connector is in the maintenance position and the maintenance side is accessible to a maintenance user.

According to an embodiment wherein the connector comprises a hinge, the reconfiguration step comprises a rotation of the second structure relative to the first structure about said hinge.

These and other features will become more apparent from the following detailed description of a preferred embodiment, illustrated by way of nonlimiting example in the accompanying drawings, in which:

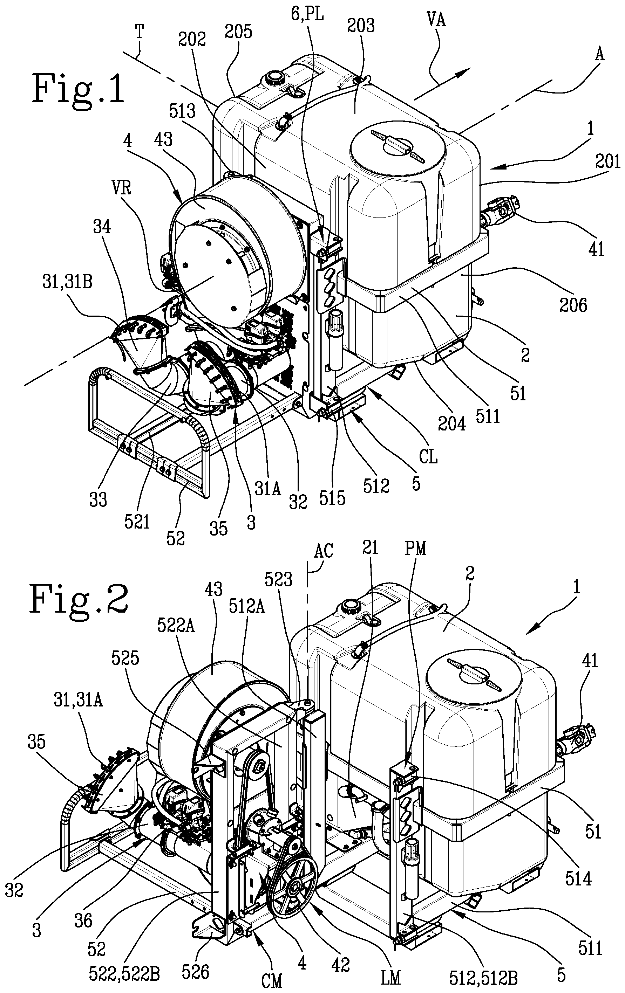

- Figure 1 is a perspective view of an apparatus for spraying crops according to the invention with a frame in a working configuration;
- Figure 2 is a perspective view of the apparatus of Figure 1 with the frame in a maintenance configuration;

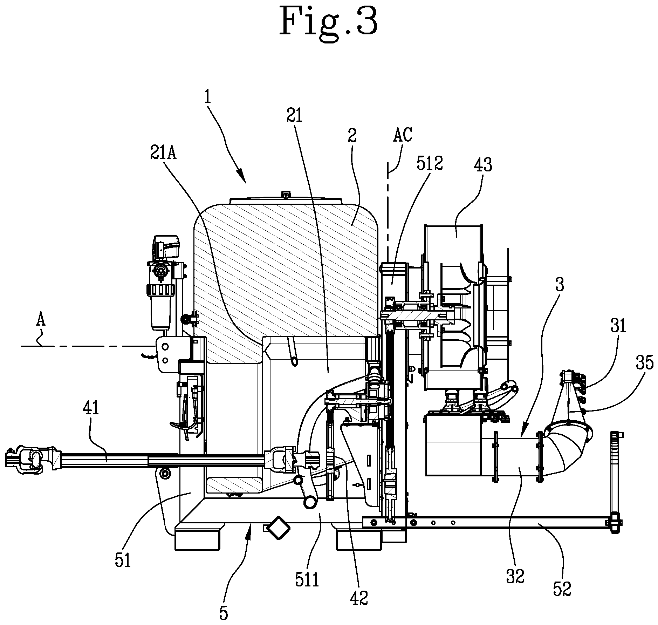

- Figure 3 is a cross-section view of the hinge of Figure 1;

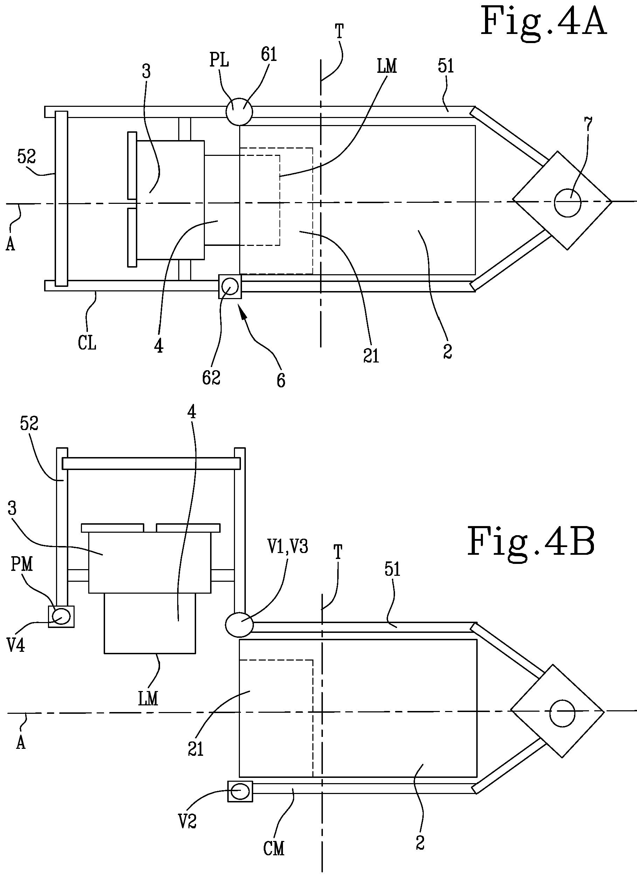

- Figures 4A and 4B schematically illustrate a plan view of the apparatus of Figure 1 with the frame in the working configuration and in the maintenance configuration, respectively;

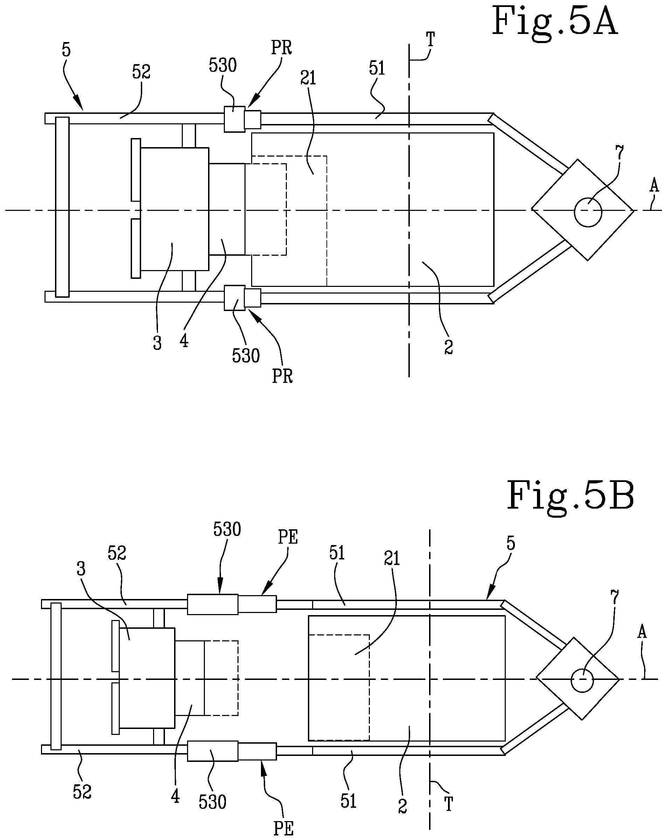

- Figures 5A and 5B schematically illustrate a plan view of a further embodiment of the apparatus of Figure 1 with the frame in the working configuration and in the maintenance configuration, respectively.

With reference to the accompanying drawings, the numeral 1 denotes an apparatus for spraying crops. The term crops is used to mean any type of agricultural cultivation. It should be noted that, even though said apparatus is mainly oriented to the treatment of agricultural crops, the invention does not limit the protection just for crops but to any application which requires the application of a treatment compound on a living being or an object.

The apparatus 1 comprises a tank 2. The tank 2 is configured to contain a treatment compound, which must be dispersed in a flow of air in a nebulized manner, for forming a treatment fluid dispensed by the apparatus 1.

The tank 2 is made preferably of plastic material. The tank 2, according to a preferred embodiment, has a substantially prismatic shape, in particular a parallelepiped or a cube.

For this reason, the tank 2 comprises a front face 201, facing a feed direction A in a feed direction VA of a tractor which transports the apparatus 1 between the crops. The tank 2 comprises a rear face 202, facing in the direction of forward movement in a withdrawal direction VR, opposite to the feed direction VA. The tank 2 also comprises an upper face 203, a lower face 204 and a pair of side faces 205, 206.

According to an embodiment, the tank 2 comprises a housing 21. The housing 21 is made on the rear surface 202, that is to say, it extends starting from the rear surface 202 in the feed direction A. According to a preferred embodiment, the housing 21 is also open towards the lower surface 204. The housing 21 defines a housing space.

According to an embodiment, the apparatus 1 comprises a dispencer 3. The dispenser 3 is configured to receive treatment air (that is, air including nebulised treatment compound) and to dispense it in a dispensing direction, towards the crops.

According to an embodiment, the dispenser 3 comprises a plurality of nozzles 31, which constitute the last interface of the apparatus 1 before the treatment air is sent towards the crops. More specifically, according to one of the various embodiments, the dispenser comprises a first duct 32 and a second duct 33, each configured for dispensing the treatment air on opposite sides relative to the feed direction A, that is, on a first and on a second row of the crops, respectively.

The first 32 and second duct 33 include a respective fan-shaped dispensing 34, 35, at the end of which a first group of nozzles 31A and a second group of nozzles 31B of said plurality of nozzles 31 are distributed, respectively.

The dispenser 3 comprises a manifold 36, which includes a plurality of valves, for selectively controlling the flow from each of said nozzles 31. In particular, each nozzle 31 is connected to a respective valve, for varying the concentrated leaks and adjusting the dispensing pressure of the respective nozzle.

With regard to this aspect, the invention comprises, for each valve and for the corresponding nozzle, a distinctive sign, which facilitates for the user the identification of the valve which corresponds to a specific nozzle 31. This solution allows the user to view the nozzles 31 to check whether there are nozzles 31 which have pressure defects and be able to act, quickly, by identifying the valve by means of the distinctive sign, to return the pressure to the correct value.

According to an embodiment, the apparatus 1 comprises a head group 4, configured to draw air from the outside, mix it with the treatment compound and send it to the dispenser 3. The head group 4 comprises one or several of the following components, known to experts in the field, but which are listed here for clarity:
- a transmission unit 42, which may comprise belts, chains, gear wheels, gears of various types, pulleys;
- a pressure head element 43, for example a centrifugal or volumetric pump or compressor, which provides a certain pressure head to the air drawn;
- a power take-off 41, from which the apparatus 1 receives the motion from the tractor which transports it.

In particular, the power take-off 41 transmits the motion supplied by the tractor to the transmission unit 42. The power take-off 41 passes through the tank 2 through a passage, open on the front surface 201 and on the housing 21. The transmission unit 42 increases the speed of rotation by reducing the torque supplied. The motion reaches the pressure head element 43, the rotation of which makes it possible to provide a pressure head to the treatment air.

The head group 4 faces the tank 2. In particular, a maintenance side LM of the head group 4 faces the rear face 202 of the tank 2. According to an embodiment, the maintenance side comprises a coupling of the transmission unit 42 to the power take-off 41 and/or at least a portion of the transmission unit 42, for example a belt-pulley unit.

According to a preferred embodiment, part of the transmission unit 42 is housed in the housing 21, with the maintenance side LM facing a bottom surface 21A, perpendicular to the feed direction A, of the housing 21.

According to a preferred embodiment, the tank is located in a forward position relative to the dispenser 3 and to the head group 4, along the feed direction A in the feed direction VA.

In one embodiment, the apparatus 1 comprises a frame 5. The frame 5 comprises a first portion 51 and a second portion 52.

The first portion 51 is configured to maintain at least the tank 2. In particular, the first portion 51 comprises a horizontal structure 511, located, along a vertical direction, below the tank 2. The first portion 51 comprises a vertical structure 512, located, along the feed direction A, between the dispenser 3 and the tank 2. The vertical structure 512 is connected at an end proximal to the dispenser 3 of the horizontal structure 511. The horizontal structure 511 of the first portion 51 is connected to the frame of the tractor which transports the apparatus 1, for example by means of a drive interface 7.

The vertical structure 512 of the first portion 51 comprises a first beam 512A. The vertical structure 512 of the first portion 51 comprises a second beam 512B. The ends of the first beam 512A define a first vertex V1 and a third vertex V3, positioned lower than the first vertex V1. The ends of the second beam 512B define a second vertex V2 and a fourth vertex V4, positioned lower than the first vertex V1.

According to an embodiment, the first portion 51 comprises a first pin 513 and a second pin (not illustrated in the drawing as it is hidden). The first pin 513 is positioned at one end of the first beam 512A of the vertical structure, whilst the second pin is positioned at the opposite end of the first beam 512A of the vertical structure 512.

According to an embodiment, the first portion 51 comprises a first locking element 514 and a second locking element 515. The first and second locking elements 514, 515 are positioned at a first and at a second end, opposite the first end, of the second beam 512B.

In particular, each of said first and second locking elements 514, 515 include a respective rotary bolt, which rotates about a vertical axis between a locked position, in which it is substantially aligned with the feed direction A, and a released position, wherein it is substantially inclined relative to the feed direction A. The axis of rotation of the first locking element 514 coincides with the axis of rotation of the second locking element 515.

The second portion 52 is configured to maintain the dispenser 3 and the head group 4. In particular, the second portion 52 comprises a corresponding horizontal structure 521, located, along a vertical direction, under the dispenser and the head group 4. The second portion 52 comprises a corresponding vertical structure 522, located, along the feed direction A, between the dispenser 3 and the tank 2. The vertical structure 522 of the second portion is connected to one end of the horizontal structure 521 proximal to the tank 2.

The vertical structure 522 of the second portion 52 includes a respective first beam 522A and a respective second beam 522B.

In particular, according to an embodiment, the second portion 52 of the frame 5 comprises a first extension 523 and a second extension, connected to the first beam 522A and which project along a direction transversal to the feed direction A towards the outside of the apparatus 1. A respective coupling hole is made at the end of each of said first 523 and second extension.

According to an embodiment, the second portion 52 of the frame 5 comprises a third extension 525 and a fourth extension 526, connected to the second beam 522B and projecting along a direction transversal to the feed direction A towards the outside of the apparatus 1. A respective coupling profile is formed at the end of each of said third 525 and fourth extension 526.

According to an embodiment, the coupling hole of the first extension 523 is configured for coupling with the first pin 513 of the first portion 51, to define a hinge 61. The coupling hole of the second extension is configured for coupling with the second pin of the first portion 51, to define a further hinge.

The coupling profile of the third extension 525 is configured to (removably) couple with the first locking element 514 (that is, with the first rotatable bolt 514), to define a locking element 62. The coupling profile of the fourth extension 526 is configured for coupling (removably) with the second locking element 515 (that is, with the second rotatable bolt 515).

According to an embodiment, the frame 5 is movable between a working configuration CL and a maintenance configuration CM.

In the working configuration CL, the maintenance side LM faces the tank 2 and/or is included in the housing 21 of the tank 2. In the working configuration CL, the vertical structure 512 of the first portion 51 and the vertical structure 522 of the second portion 52 are approximated with each other, that is, in contact, that is, aligned along a direction T transversal to the feed direction. In particular, according to an embodiment, in the working configuration CL, the first and the second beam 522A, 522B of the second portion 52 are interposed, along the transversal direction T, between the first and the second beam 512A, 512B of the first portion 51.

In the working configuration CL, the first and second locking elements 514, 515 are in an working position PL, that is to say, inserted in the corresponding coupling profiles of the third and fourth extension 525, 526, respectively, with the corresponding bolt which is tightened on a surface of the third and fourth extension 525, 526, in such a way as to prevent a rotation of the rotary bolt.

In the maintenance configuration CM, the first and the second locking element 514, 515 are in a maintenance position PM, that is, removed from the corresponding coupling profiles of the third and fourth extension 525, 526, respectively.

According to an embodiment, in the maintenance configuration CM, the maintenance side is accessible to a user who wants to maintain it. In particular, the maintenance side LM faces towards the side of the apparatus 1, that is, facing the transversal direction T. According to this embodiment, the second portion 52 is configured to rotate relative to the first portion 51. In particular, the second portion rotates about an axis of configuration AC, passing through the first and the second pin of the first portion 51. In that what way, the maintenance side LM is made accessible to the user without difficulty. For this reason, according to this embodiment, the following steps are performed for maintenance of the machine:
- rotating the nut to loosen the first and the second rotatable bolt 514, 515;
- rotating the first and the second rotatable bolt 514, 515 to remove them from the respective coupling profile of the second portion 52;
rotating the second portion 52 relative to the first portion 51 about the configuration axis.

At the end of maintenance operations, the user performs the following steps:
- rotating the second portion 52 relative to the first portion 51 to the operating configuration CL;
- rotating the first and second rotatable bolt 514, 515 to insert them in the respective coupling profile of the second portion 52;
- tightening the nuts to lock the rotation of the first and second rotatable bolt 514, 515 and maintain the frame 5 in the working configuration CL.

According to other embodiments, the maintenance side LM remains facing the tank 2 even in the maintenance configuration CM but at a distance from the tank 2 equal to at least 30 cm, preferably between 50 cm and 100 cm.

According to this embodiment, the apparatus 1 comprises a plurality of linear actuators 530, for example piston cylinder units or telescopic actuators. Said plurality of linear actuators 530 are connected on one side to the first portion 51 and on the other to the second portion 52. Said plurality of linear actuators 530 may be positioned at vertices of the vertical structures from the first and second portions 51, 52.

According to this embodiment, the vertical structure 522 of the second portion 52 can slide on the horizontal structure 521 along the feed direction A. This makes it possible not to load the bending force on the plurality of linear actuators 530 but to discharge the weight on the horizontal structure 521. Preferably, the horizontal structure 521 is also telescopic, in this embodiment, to prevent large dimensions which must also take into account the space left for the user in the maintenance configuration CM of the frame 5.

Said plurality of linear actuators 530 is movable between an extracted position PE, corresponding to the maintenance configuration CM of the frame 5, in which the second portion 52 is spaced from the first portion 51 by a working distance greater than 30 cm, and a retracted position PR, corresponding to the working configuration CL of the frame 5, in which the second portion 52 is very close to the first portion 51 and the maintenance side LM is prevented from access. The movement of the dispenser 3 and of the head group 4 along the feed direction A is guided by guides positioned on the horizontal structure 521.

## Claims

1. Apparatus (1) for spraying crops with a treating compound, including:
- a tank (2), configured to contain the treatment compound;
- a dispenser (3), configured to receive treatment air, including the treatment compound in atomised form, at a predetermined treatment pressure;
- a head group (4), configured to draw air from an external environment, mix it with the treating compound and pump it to the dispenser (3), the head group (4) including a maintenance side (LM), from which the head group (4) is accessible for maintenance activities; the head group (4) including a transmission unit (42) and the maintenance side (LM) showing the transmission unit (42),
- a frame (5), configured to support the tank (2), the dispenser (3) and the head group (4) and including a first structure (51), on which is placed the tank (2), and a second structure (52), on which are placed the dispenser (3) and the head group (4); the first (51) and the second structure (52) being placed side by side along a direction of advance (A) along which the apparatus advances between crops,
**characterized by** the fact that the frame (5) includes a connector (6), configured to connect the first structure (51) to the second structure (52) and mobile between a working position (PL), in which the first (51) and the second structure (52) are bound to each other, and a maintenance position (PM), in which the first (51) and the second structure (52) are mobile to each other,
and where the frame (5) is mobile between a working configuration (CL), where the connector (6) is in the working position (PL) and the maintenance side (LM) is facing the tank (2) and forbidden to a maintenance user, and a maintenance configuration (CM), where the connector (6) is in the maintenance position (PM) and the maintenance side (LM) is accessible to the maintenance user.

2. Apparatus (1) according to claim 1, wherein the connector (6) comprises a hinge (61) and a locking element (62), and in which the second structure (52) is rotating around the hinge (61) and the locking element (62) is mobile between a locked position, in which the first (51) and the second structure (52) are bound to each other, and an unlocked position, in which the first (51) and the second structure (52) are rotating, one relative to the other, around the hinge (61).

3. Apparatus (1) according to claim 2, wherein the first structure (51) includes a first (V1) and a second vertex (V2), facing the second structure (52) and spaced along a transverse direction (T), perpendicular to the forward direction (A) and in which the second structure (52) includes a third (V3) and a fourth vertex (V4), facing the first structure (51) and spaced along a transverse direction (T), and where the hinge (61) is connected to the first (V1) and third vertex (V3) and where the blocking element (62) is configured to bind the second vertex (V2) to the fourth vertex (V4).

4. Apparatus (1) according to claim 3, wherein the locking element (62) includes a pin, and where the second (V2) and fourth vertex (V4) include a corresponding locking hole, said pin being inserted, in the working position (PL), in the locking hole of the second (V2) and fourth vertex (V4), and where, in the maintenance position (PM), said pin is extracted from the locking hole of the second (V2) and fourth vertex (V4).

5. Apparatus (1) according to any of the preceding claims, wherein the tank (2) includes a rear face, facing the head group (4), and a housing (21), obtained on the rear face, the head group (4) being partially housed in the housing (21), in the working configuration (CL) of the chassis (2), and being completely extracted from the housing (21), in the maintenance configuration (CM) of the frame (5).

6. Apparatus (1) according to any of the preceding claims, wherein the header group (4) includes a manifold including a plurality of delivery and a corresponding plurality of control valves, and in which the dispenser includes a plurality of nozzles, each connected to a corresponding delivery, each control valve and the corresponding nozzle being identified with the same distinctive mark.

7. Apparatus (1) according to any of the preceding claims, wherein the first structure (51) of the frame includes a power take-off (41), connectable to an engine, to receive an engine power from the engine.

8. Apparatus (1) according to any of the preceding claims, wherein the head group (4) comprises a motor, a transmission system and a pump.

9. Method for the spraying of crops, by means of an apparatus (1) including a frame (5):
- a first structure (51), which supports a tank (2) of the apparatus (1);
- a second structure (52), which supports a dispenser (3) and a head group (4) of the apparatus (1), including a maintenance side (LM), from which the head group (4) is accessible for maintenance activities, Wherein the head group (4) includes a transmission unit (42) and the maintenance side (LM) showing the transmission unit (42) and the second structure (52) being flanked by the first structure (51), along a direction of advancement (A) along which the apparatus (1) advances between crops, the method including the following steps:
- containing a treating compound in the tank (2);
- mixing air with the nebulized treatment compound to produce treatment air;
- pumping the treating air through the head group (4);
- supplying the treating air through the dispenser (3),
**characterized by** the fact that the method includes the following steps:
- connecting the first structure (51) to the second structure (52) via a connector (6);
- moving the connector (6) between a working position (PL), where the first (51) and the second structure (52) are bound to each other, and a maintenance position (PM), where the first (51) and the second structure (52) are mobile to each other;
- switching the frame (2) between a working configuration (CL), where the connector (6) is in the working position (PL) and the maintenance side (LM) is facing the tank (2) and forbidden to a maintenance user, and a maintenance configuration (CM), where the connector (2) is in the maintenance position (PM) and the maintenance side (LM) is accessible to a maintenance user.

10. Method according to claim 9, wherein the connector (6) includes a hinge (61) and in which the switching step includes a rotation of the second structure (52) with respect to the first structure (51) around said hinge (61).

## Patentansprüche

1. Vorrichtung (1) zum Besprühen von Erntegut mit einer Behandlungszusammensetzung, einschließend:
- einen Behälter (2), der ausgelegt ist, um die Behandlungszusammensetzung zu enthalten;
- eine Ausgabevorrichtung (3), die ausgelegt ist, um Behandlungsluft, einschließend die Behandlungszusammensetzung in zerstäubter Form, bei einem vorbestimmten Behandlungsdruck zu empfangen;
- eine Förderhöhengruppe (4), die ausgelegt ist, um Luft von einer äußeren Umgebung anzusaugen, diese mit der Behandlungszusammensetzung zu mischen und zur Ausgabevorrichtung (3) zu pumpen, wobei die Förderhöhengruppe (4) eine Wartungsseite (LM) einschließt, von der die Förderhöhengruppe (4) für Wartungsmaßnahmen zugänglich ist, wobei die Förderhöhengruppe (4) eine Getriebeeinheit (42) einschließt und die Wartungsseite (LM) die Getriebeeinheit (42) zeigt;
- einen Rahmen (5), der ausgelegt ist, um den Behälter (2), die Ausgabevorrichtung (3) und die Förderhöhengruppe (4) zu stützen, und einschließend eine erste Struktur (51), auf der der Behälter (2) platziert ist, und eine zweite Struktur (52), auf der die Ausgabevorrichtung (3) und die Förderhöhengruppe (4) platziert sind, wobei die erste (51) und die zweite Struktur (52) nebeneinander entlang einer Vorschubrichtung (A) platziert sind, entlang derer die Vorrichtung zwischen dem Erntegut vorgeschoben wird,
**dadurch gekennzeichnet, dass** der Rahmen (5) einen Verbinder (6) einschließt, der ausgelegt ist, um die erste Struktur (51) mit der zweiten Struktur (52) zu verbinden, und der zwischen einer Arbeitsposition (PL), in der die erste (51) und die zweite Struktur (52) aneinander gebunden sind, und einer Wartungsposition (PM), in der die erste (51) und die zweite Struktur (52) zueinander beweglich sind, beweglich ist,
und wobei der Rahmen (5) zwischen einer Arbeitsauslegung (CL), in der sich der Verbinder (6) in der Arbeitsposition (PL) befindet und die Wartungsseite (LM) dem Behälter (2) zugewandt und einem Wartungsnutzer verboten ist, und einer Wartungsauslegung (CM), in der sich der Verbinder (6) in der Wartungsposition (PM) befindet und die Wartungsseite (LM) für den Wartungsnutzer zugänglich ist, beweglich ist.

2. Vorrichtung (1) nach Anspruch 1, wobei der Verbinder (6) ein Scharnier (61) und ein Sperrelement (62) umfasst, und bei der sich die zweite Struktur (52) rund um das Scharnier (61) dreht und das Sperrelement (62) zwischen einer gesperrten Position, in der die erste (51) und die zweite Struktur (52) aneinander gebunden sind, und einer entsperrten Position, in der sich die erste (51) und die zweite Struktur (52) jeweils zueinander rund um das Scharnier (61) drehen, beweglich ist.

3. Vorrichtung (1) nach Anspruch 2, wobei die erste Struktur (51) einen ersten (V1) und einen zweiten Scheitel (V2) einschließt, die der zweiten Struktur (52) zugewandt und entlang einer Querrichtung (T) beabstandet sind, die senkrecht zur Vorwärtsrichtung (A) verläuft, und bei der die zweite Struktur (52) einen dritten (V3) und einen vierten Scheitel (V4) einschließt, die der ersten Struktur (51) zugewandt und entlang einer Querrichtung (T) beabstandet sind, und bei der das Scharnier (61) mit dem ersten (V1) und dem dritten Scheitel (V3) verbunden ist und bei der das Sperrelement (62) ausgelegt ist, um den zweiten Scheitel (V2) an den vierten Scheitel (V4) zu binden.

4. Vorrichtung (1) nach Anspruch 3, wobei das Sperrelement (62) einen Zapfen einschließt, und bei der der zweite (V2) und der vierte Scheitel (V4) ein entsprechendes Sperrloch einschließen, wobei der Zapfen in der Arbeitsposition (PL) in das Sperrloch des zweiten (V2) und des vierten Scheitels (V4) eingefügt ist, und bei der der Zapfen in der Wartungsposition (PM) aus dem Sperrloch des zweiten (V2) und des vierten Scheitels (V4) herausgezogen wird.

5. Vorrichtung (1) nach einem der vorhergehenden Ansprüche, wobei der Behälter (2) eine rückseitige Fläche einschließt, die der Förderhöhengruppe (4) zugewandt ist, und eine Aufnahme (21), die auf der rückseitigen Fläche ausgebildet ist, wobei die Förderhöhengruppe (4) in der Arbeitsauslegung (CL) des Gestells (2) in der Aufnahme (21) untergebracht ist und in der Wartungsauslegung (CM) des Rahmens (5) vollständig aus der Aufnahme (21) herausgezogen ist.

6. Vorrichtung (1) nach einem der vorhergehenden Ansprüche, wobei die Förderhöhengruppe (4) ein Verteilerrohr einschließt, das eine Vielzahl von Zuläufen und eine entsprechende Vielzahl von Regelventilen einschließt, und bei der die Ausgabevorrichtung eine Vielzahl von Düsen einschließt, die jeweils mit einem entsprechenden Zulauf verbunden sind, wobei ein jedes Regelventil und die entsprechende Düse mit demselben Unterscheidungszeichen gekennzeichnet sind.

7. Vorrichtung (1) nach einem der vorhergehenden Ansprüche, wobei die erste Struktur (51) des Rahmens eine Zapfwelle (41) einschließt, die mit einer Kraftmaschine verbindbar ist, um eine Antriebskraft von der Kraftmaschine zu erhalten.

8. Vorrichtung (1) nach einem der vorhergehenden Ansprüche, wobei die Förderhöhengruppe (4) einen Motor, ein Getriebesystem und eine Pumpe umfasst.

9. Verfahren zum Besprühen von Erntegut mittels einer Vorrichtung (1), einschließend einen Rahmen (5), der Folgendes einschließt:
- eine erste Struktur (51), die einen Behälter (2) der Vorrichtung (1) stützt;
- eine zweite Struktur (52), die eine Ausgabevorrichtung (3) und eine Förderhöhengruppe (4) der Vorrichtung (1) stützt, einschließend eine Wartungsseite (LM), von der aus die Förderhöhengruppe (4) für Wartungsmaßnahmen zugänglich ist,
wobei die Förderhöhengruppe (4) eine Getriebeeinheit (42) einschließt und die Wartungsseite (LM) die Getriebeeinheit (42) zeigt und die zweite Struktur (52) von der ersten Struktur (51) entlang einer Vorschubrichtung (A) flankiert ist, entlang derer die Vorrichtung (1) zwischen dem Erntegut vorgeschoben wird,
wobei das Verfahren die folgenden Schritte einschließt:
- Enthalten einer Behandlungszusammensetzung im Behälter (2);
- Mischen von Luft mit der vernebelten Behandlungszusammensetzung, um Behandlungsluft zu erhalten;
- Pumpen der Behandlungsluft durch die Förderhöhengruppe (4);
- Zuführen der Behandlungsluft durch die Ausgabevorrichtung (3),
**dadurch gekennzeichnet, dass** das Verfahren die folgenden Schritte einschließt:
- Verbinden der ersten Struktur (51) mit der zweiten Struktur (52) über einen Verbinder (6);
- Bewegen des Verbinders (6) zwischen einer Arbeitsposition (PL), in der die erste (51) und die zweite Struktur (52) aneinander gebunden sind, und einer Wartungsposition (PM), in der die erste (51) und die zweite Struktur (52) zueinander beweglich sind;
- Wechseln des Rahmens (2) zwischen einer Arbeitsauslegung (CL), in der sich der Verbinder (6) in der Arbeitsposition (PL) befindet und die Wartungsseite (LM) dem Behälter (2) zugewandt und dem Wartungsnutzer verboten ist, und einer Wartungsauslegung (CM), in der sich der Verbinder (2) in der Wartungsposition (PM) befindet und die Wartungsseite (LM) für einen Wartungsnutzer zugänglich ist.

10. Verfahren nach Anspruch 9, wobei der Verbinder (6) ein Scharnier (61) einschließt, und bei der der Schritt zum Wechseln eine Drehung der zweiten Struktur (52) in Bezug auf die erste Struktur (51) rund um das Scharnier (61) einschließt.

## Revendications

1. Appareil (1) de vaporisation de cultures avec un composé de traitement, incluant :
- un réservoir (2), configuré pour contenir le composé de traitement ;
- un distributeur (3), configuré pour recevoir de l'air de traitement, y inclus le composé de traitement sous forme atomisée, à une pression de traitement prédéterminée ;
- un groupe de tête (4), configuré pour aspirer de l'air d'un environnement extérieur, le mélanger avec le composé de traitement et le pomper vers le distributeur (3), le groupe de tête (4) incluant un côté maintenance (LM), à partir duquel le groupe de tête (4) est accessible pour les activités de maintenance ; le groupe de tête (4) incluant une unité de transmission (42) et le côté maintenance (LM) montrant l'unité de transmission (42),
- un cadre (5), configuré pour soutenir le réservoir (2), le distributeur (3) et le groupe de tête (4) et incluant une première structure (51), sur laquelle est placé le réservoir (2), et une seconde structure (52), sur laquelle sont placés le distributeur (3) et le groupe de tête (4) ; la première (51) et la seconde structure (52) étant placées côte à côte le long d'une direction d'avance (A) le long de laquelle l'appareil avance entre les cultures,
**caractérisé en ce que** le cadre (5) inclut un connecteur (6), configuré pour connecter la première structure (51) à la seconde structure (52) et mobile entre une position de travail (PL), dans laquelle la première (51) et la seconde structure (52) sont liées l'une à l'autre, et une position de maintenance (PM), dans laquelle la première (51) et la seconde structure (52) sont mobiles l'une par rapport à l'autre,
et dans lequel le cadre (5) est mobile entre une configuration de travail (CL), où le connecteur (6) est en position de travail (PL) et le côté de maintenance (LM) fait face au réservoir (2)) et est interdit à un utilisateur de maintenance, et une configuration de maintenance (CM), où le connecteur (6) est en position de maintenance (PM) et le côté maintenance (LM) est accessible à l'utilisateur de maintenance.

2. Appareil (1) selon la revendication 1, dans lequel le connecteur (6) comprend une charnière (61) et un élément de verrouillage (62), et dans lequel la seconde structure (52) tourne autour de la charnière (61) et l'élément de verrouillage (62) est mobile entre une position verrouillée, dans laquelle la première (51) et la seconde structure (52) sont liées l'une à l'autre, et une position déverrouillée, dans laquelle la première (51) et la seconde structure (52) tournent, l'une par rapport à l'autre, autour de la charnière (61).

3. Appareil (1) selon la revendication 2, dans lequel la première structure (51) inclut un premier (V1) et un deuxième sommet (V2), faisant face à la seconde structure (52) et espacés le long d'une direction transversale (T), perpendiculaire à la direction vers l'avant (A) et dans lequel la seconde structure (52) inclut un troisième (V3) et un quatrième sommet (V4), faisant face à la première structure (51) et espacés le long d'une direction transversale (T), et où la charnière (61) est connectée au premier (V1) et au troisième sommet (V3) et où l'élément de verrouillage (62) est configuré pour lier le deuxième sommet (V2) au quatrième sommet (V4).

4. Appareil (1) selon la revendication 3, dans lequel l'élément de verrouillage (62) inclut une broche, et où le deuxième (V2) et le quatrième sommet (V4) incluent un trou de verrouillage correspondant, ladite broche étant insérée, dans la position de travail (PL), dans le trou de verrouillage du deuxième (V2) et du quatrième sommet (V4), et où, dans la position de maintenance (PM), ladite broche est extraite du trou de verrouillage du deuxième (V2) et du quatrième sommet (V4).

5. Appareil (1) selon l'une quelconque des revendications précédentes, dans lequel le réservoir (2) inclut une face arrière, faisant face au groupe de tête (4), et un boîtier (21), obtenu sur la face arrière, le groupe de tête (4) étant partiellement logé dans le boîtier (21), dans la configuration de travail (CL) du châssis (2), et étant complètement extrait du boîtier (21), dans la configuration de maintenance (CM) du cadre (5).

6. Appareil (1) selon l'une quelconque des revendications précédentes, dans lequel le groupe de tête (4) inclut un collecteur incluant une pluralité de distributions et une pluralité correspondante de soupapes de commande, et dans lequel le distributeur inclut une pluralité de buses, chacune connectée à une distribution correspondante, chaque soupape de commande et la buse correspondante étant identifiées par le même signe distinctif.

7. Appareil (1) selon l'une quelconque des revendications précédentes, dans lequel la première structure (51) du cadre inclut une prise de force (41), pouvant être connectée à un moteur, pour recevoir une puissance de moteur provenant du moteur.

8. Appareil (1) selon l'une quelconque des revendications précédentes, dans lequel le groupe de tête (4) comprend un moteur, un système de transmission et une pompe.

9. Procédé de vaporisation de cultures, au moyen d'un appareil (1) incluant un cadre (5), incluant :
- une première structure (51), qui soutient un réservoir (2) de l'appareil (1) ;
- une seconde structure (52), qui soutient un distributeur (3) et un groupe de tête (4) de l'appareil (1), incluant un côté maintenance (LM), à partir duquel le groupe de tête (4) est accessible pour les activités de maintenance,
dans lequel le groupe de tête (4) inclut une unité de transmission (42) et le côté maintenance (LM) montrant l'unité de transmission (42) et la seconde structure (52) étant flanquée de la première structure (51), le long d'une direction d'avancement (A) le long de laquelle l'appareil (1) avance entre les cultures,
le procédé incluant les étapes suivantes :
- contenir un composé de traitement dans le réservoir (2) ;
- mélanger de l'air avec le composé de traitement nébulisé pour produire de l'air de traitement ;
- pomper l'air de traitement à travers le groupe de tête (4) ;
- fournir l'air de traitement à travers le distributeur (3),
**caractérisé en ce que** le procédé inclut les étapes suivantes :
- connecter la première structure (51) à la seconde structure (52) via un connecteur (6) ;
- déplacer le connecteur (6) entre une position de travail (PL), où la première (51) et la seconde structure (52) sont liées l'une à l'autre, et une position de maintenance (PM), où la première (51) et la seconde structure (52) sont mobiles l'une par rapport à l'autre ;
- commuter le cadre (2) entre une configuration de travail (CL), où le connecteur (6) est en position de travail (PL) et le côté maintenance (LM) est tourné vers le réservoir (2) et est interdit à un utilisateur de maintenance, et une configuration de maintenance (CM), où le connecteur (2) est en position maintenance (PM) et le côté maintenance (LM) est accessible à un utilisateur de maintenance.

10. Procédé selon la revendication 9, dans lequel le connecteur (6) inclut une charnière (61) et dans lequel l'étape de commutation inclut une rotation de la seconde structure (52) par rapport à la première structure (51) autour de ladite charnière (61).
